# EUROPEAN PATENT SPECIFICATION

(11) **EP 2 393 196 B1**
(45) Date of publication and mention of the grant of the patent: **24.09.2014**
(21) Application number: 11168742.2
(22) Date of filing: 03.06.2011
(51) Int. Cl.: H02M 3/335, H02M 1/32

(54) **Buck-boost mode switching method for a DC-DC converter, and DC-DC converter**
Tiefsetz-Hochsetz-Modusumschaltverfahren für einen Gleichspannungswandler und Gleichspannungswandler
Procédé de commutation de mode mixte pour convertisseur CC/CC, et convertisseur CC/CC

(30) Priority: 03.06.2010 IT TO20100465
(43) Date of publication of application: 07.12.2011
(73) Proprietor: Alenia Aermacchi S.p.A., 21040 Venegono Superiore (VA) (IT)
(72) Inventor: Anastasio, Vincenzo, 80123 Napoli (IT); Di Donna, Laura, 83042 Atripalda (IT); Marino, Pompeo, 80122 Napoli (IT); Cavallo, Alberto, 80122 Napoli (IT); Guida, Beniamino, 81031 Aversa (IT); Rubino, Luigi, 81031 Aversa (IT)
(74) Representative: Bergadano, Mirko

(56) References cited:
- US-A- 6 021 052
- US-B1- 6 191 964
- US-B1- 6 344 985
- US-B1- 6 894 461

## Description

The present invention relates to a switching method between boost mode (step-up voltage operating mode) and buck mode (step-down voltage operating mode) and vice versa for a DC-DC converter, and a DC-DC converter that implements this method, in particular a bi-directional DC-DC converter.

As is known, a bi-directional DC-DC converter basically performs two operations: stepping up the voltage between an input bus, where there is a low-voltage DC source (28 V for example), and an output bus, where a higher DC voltage than that present on the input side is required (270 V for example); and stepping down the voltage between an input bus, where there is a high-voltage DC source, and a output bus, where a lower DC voltage than that present on the input side is required.

DC-DC converters are, for example, used in buck mode when the voltage on the high voltage bus has a satisfactory value for an intended application (for example, with reference to a certain standard) or for operating devices and equipment powered by means of the high voltage bus and with a battery to be recharged on the low voltage bus. The voltage taken from the high voltage bus is consequently reduced to an acceptable level for the low voltage bus and applied to the input of the low voltage bus. In alternative or in addition to that mentioned, the DC-DC converter can be used to power generic devices connected to the low voltage bus.

The DC-DC converter is controlled in boost mode when the voltage on the high voltage bus has an unacceptable value for an intended application (for example, with reference to a certain standard) or for operating devices and equipment powered by means of the high voltage bus. In this case, energy accumulated in the battery during operation in buck mode is taken, the voltage stepped up and supplied in input to the high voltage bus, in order to restore the required voltage level on the high voltage bus. The flow of energy between the low voltage bus and the high voltage bus continues until the cause of the voltage drop on the high voltage bus is eliminated or until the battery runs down. In this latter case, the system comprising the low voltage bus, the DC-DC converter and the high voltage bus is normally declared to have a fault, due to the voltage values required for its operation not being respected.

Historically, the converters used in the field of aeronautics are unidirectional, which implies the use of two converters for making a bi-directional converter (with voltage step-up and step-down operating modes). Some makers propose sharing part of the elements common to the two converters (such as the magnetic elements for example), thereby merging two into one. This can easily be achieved with some types of intrinsically bi-directional topologies. However, these topologies are not well suited to being used with high operating powers; it consequently becomes necessary to use more complex circuits, from the standpoint of both hardware and control software.

The transition from buck mode to boost mode does not take place automatically, or is automatic but in a non-transparent manner, in the sense that the DC-DC converter is declared out of service for the time necessary for passage between the two operating modes (control electronics, external to the converter, are necessary for handling the transition). Similarly, the transition from boost mode to buck mode is not performed automatically either, or is automatic but in a non-transparent manner.

Document US 6344985 relates generally to the field of bi-directional power conversion devices, in particular to a bi-directional DC-AC or DC-DC power conversion device.

Document US 6191964 discloses a rectifier for use in a power system having a power train, the rectifier having an input and an output and a method of controlling the rectifier.

The object of the present invention is to provide a method of switching between boost mode (step-up voltage operating mode) and buck mode (step-down voltage operating mode) for a DC-DC converter, and a DC-DC converter that implements this method, devoid of the problems of the known art.

According to the present invention, a method is provided of switching between boost mode (step-up voltage operating mode) and buck mode (step-down voltage operating mode) for a DC-DC converter, and a DC-DC converter that implements this method, as defined in the appended claims.

For a better understanding of the present invention, a preferred embodiment will now be described, purely by way of non-limitative example, with reference to the attached drawings, where:
- Figure 1 shows an electrical network comprising a DC-DC converter;
- Figure 2 shows a bi-directional DC-DC converter usable in the electrical network of Figure 1;
- Figure 3 shows the circuit diagram of a DC-DC conversion circuit belonging to the bi-directional DC-DC converter of Figure 2;
- Figures 4a-4d show the traces of the drive signals of the conversion circuit of Figure 3 operating in boost mode with a duty cycle greater than 50%;
- Figures 5a-5d show the traces of the drive signals of the conversion circuit of Figure 3 operating in boost mode with a duty cycle less than 50%;
- Figures 6a-6d show the traces of the drive signals of the conversion circuit of Figure 3 operating in buck mode with a duty cycle greater than 50%;
- Figure 7 shows, by means of a block diagram, a control and drive logic of the conversion circuit of Figure 3;
- Figure 8 shows, by means of a state diagram, a control method of the bi-directional DC-DC converter of Figure 2;
- Figure 9 shows an equivalent circuit for the bi-directional DC-DC converter of Figure 2;
- Figure 10 shows, by means of a state diagram, a method of switching between boost mode (step-up voltage operating mode) and buck mode (step-down voltage operating mode) of the bi-directional DC-DC converter of Figure 2;
- Figure 11 is a more detailed representation of the state diagram of Figure 10;
- Figure 12 is a block representation of the hysteresis controller used, according to the method of Figure 10, to vary the duty cycle driving the bi-directional DC-DC converter of Figure 2 during operation of the latter in step-down mode; and
- Figure 13 is a block representation of the hysteresis controller used, according to the method of Figure 10, to vary the duty cycle driving the bi-directional DC-DC converter of Figure 2 during operation of the latter in step-up mode.

The present invention relates to a control method for switching between buck mode and boost mode for a bi-directional DC-DC converter in an automatic and user-transparent manner. More in detail, handling the transition between buck mode and boost mode is based on the analysis of Power Quality (PQ) on the high voltage bus. In particular, the reference standard for aeronautical applications is ML-STD-704F. The passage from buck mode to boost mode is handled in an innovative manner, because in buck mode the DC-DC converter itself is considered to be a load connected to the high voltage bus and therefore, if after leaving buck mode the Power Quality is adequate with respect to a reference value, transfer is enabled of a small amount of energy, which is therefore sustainable by the system as a whole, from the high voltage bus to the low voltage bus.

The passage from boost mode to buck mode is also handled in an innovative manner, as the event that triggers the transition is correlated to analysis performed on the load condition of the high voltage bus that does not require using supplementary information on devices connected to the high voltage bus, which can therefore be of any type.

According to one embodiment of the present invention, a method and a circuit are described for the control and monitoring of a high-power bi-directional converter or a plurality of high-power bi-directional converters of the interlaced type. Reference is made to boost-full bridge type converters in particular. Unlike that known, the control of converters of the type described hereunder requires the implementation of hardware and/or software and/or logical protections to ensure, for each operating state of the converter, its passage to another safe operating state in the event of anomalies or changes in the network to which it is connected. If the anomaly encountered is that of not respecting the network voltage requirements set by the standard, the final state can be another operating mode (step-up or step-down); the anomaly is considered a fault if the requirements for switching to another mode of the converter are lacking.

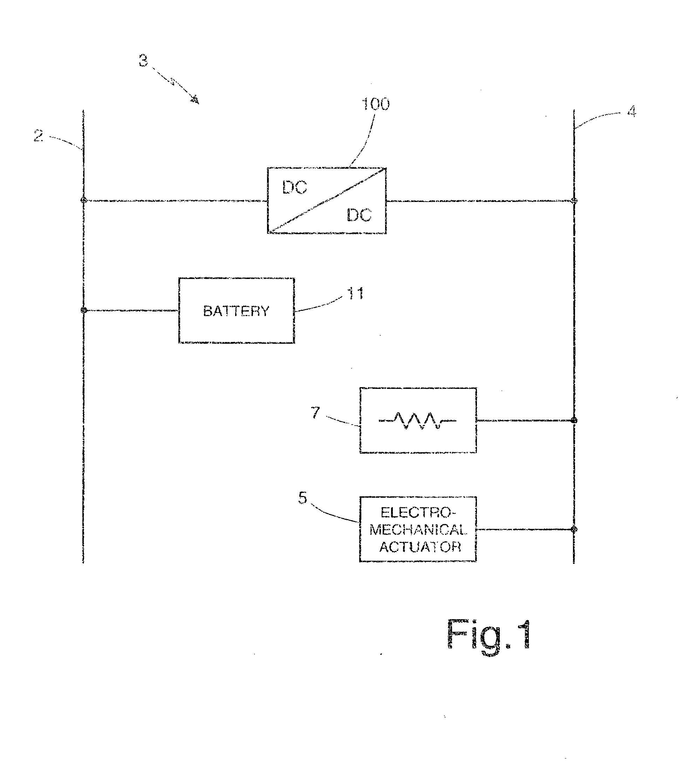

Figure 1 shows an electrical network 3 comprising a high voltage bus 4 that powers a plurality of devices. For example, the high voltage bus 4 supplies power to an electromechanical actuator 5, absorbing a rated power of 2 kw, and a generic resistive load 7, absorbing a rated power of 75 kW. The electrical network 3 further comprises a low voltage bus 2, to which a battery 11 is connected. The low voltage bus 2 is connected to the high voltage bus 4 by means of a bi-directional DC-DC converter 100. The high voltage bus 4 operates at one voltage, for example 270 V, while the low voltage bus 2 operates at a lower voltage, for example 28 V. The high voltage bus 4 can, for example, be connected to the output of an autotransformer rectifier (not shown) that supplies power to the high voltage bus 4; the autotransformer rectifier is powered, in turn, by one or more generators (not shown). The low voltage bus 2 and the high voltage bus 4 can indifferently comprise active and/or passive elements.

When the electrical network 3 is switched on, the bi-directional DC-DC converter 100 is configured to operate in buck mode and sets itself in that mode after a start-up step of known type.

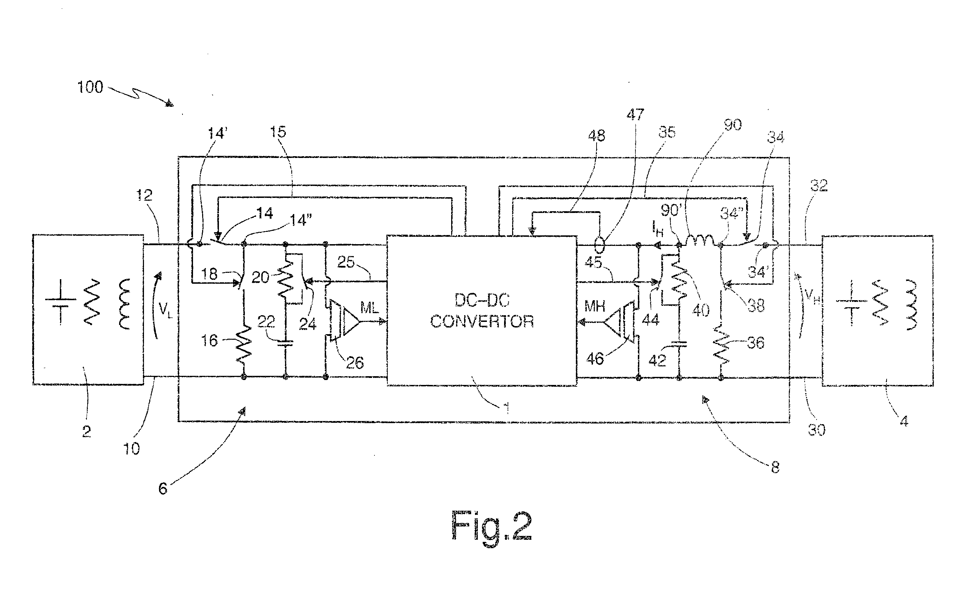

Figure 2 shows a DC-DC conversion device 1 electrically connected between the high voltage bus 4 and the low voltage bus 2 and, through the latter, to the battery 11.

The DC-DC conversion device 1 is connected to the low voltage bus 2 by means of a first power interface 6 and is connected to the high voltage bus 4 by means of a second power interface 8. The first power interface 6 and the second power interface 8 are made in a similar manner to one another and are symmetrical with respect to the DC-DC conversion device 1. The DC-DC conversion device 1, together with the first power interface 6 and the second power interface 8, form a bi-directional converter 100.

The first power interface 6 comprises a first electrical branch 10 directly connecting the low voltage bus 2 to the DC-DC conversion device 1 and a second electrical branch 12 connecting the low voltage bus 2 to the DC-DC conversion device 1 by means of a first switch 14. The first switch 14 is connected to a first node 14' directly connected to the second electrical branch 12 and a second node 14" that ideally coincides with the first node 14' when the first switch 14 is closed. When the first switch 14 is open, the first power interface 6 is not directly powered by, or does not power, the low voltage bus 2; vice versa, when the first switch 14 is closed, the first power interface 6 is directly powered by, or powers, the low voltage bus 2.

The first power interface 6 further comprises a first resistor 16 and a second switch 18, arranged in series with each other and connecting the first electrical branch 10 to the second electrical branch 12. The first power interface 6 further comprises a second resistor 20 and a first capacitor 22, arranged in series with each other and connecting the first electrical branch 10 to the second electrical branch 12. In particular, the first capacitor 22 is directly connected to the first electrical branch 10 and is connected to the second electrical branch 12 through the second resistor 20. In this way, the series constituted by the first resistor 16 and the second switch 18 is connected in parallel to the series constituted by the second resistor 20 and the first capacitor 22. The first capacitor 22 is also connected in parallel to a third switch 24 able to create, when closed, a short circuit that bypasses the second resistor 20. The opening and closing of the third switch 24 is directly controlled by the DC-DC conversion device 1, through a control connection 25, on the basis of whether, during use, it is necessary to charge the first capacitor 22. In addition, a voltage detector 26, of the isolated type, is connected between the first electrical branch 10 and the second electrical branch 12, configured to detect the voltage present between the first electrical branch 10 and the second node 14" of the first switch 14 and provide the DC-DC conversion device 1 with the detected value (this value is indicated in the figure by reference M_{L}).

The second power interface 8 is, as mentioned, symmetrical to the first power interface 6 with respect to the DC-DC conversion device 1. The second power interface 8 therefore comprises a third electrical branch 30 directly connecting the high voltage bus 4 to the DC-DC conversion device 1 and a fourth electrical branch 32 connecting the high voltage bus 4 to the DC-DC conversion device 1 by means of a fourth switch 34, the opening and closing of which is controlled by the DC-DC conversion device 1 through a control connection 35. The fourth switch 34 is connected between a third node 34' directly connected to the fourth electrical branch 32 and a fourth node 34" that ideally coincides with the third node 34' when the fourth switch 34 is closed. When the fourth switch 34 is open, the second power interface 8 does not power, or is not directly powered by, the high voltage bus 4; vice versa, when the fourth switch 34 is closed, the second power interface 8 powers, or is directly powered by, the high voltage bus 4. The second power interface 8 further comprises a third resistor 36 and a fifth switch 38, arranged in series with each other and connecting the third electrical branch 30 to the fourth node 34". Resistor 36, like resistor 16, has the function of ensuring the presence of a load on the DC-DC conversion device 1 even in the case of sudden disconnection of the high voltage bus 4.

An inductor 90 is connected in series with the fourth switch 34, connected to the fourth node 34". The inductor 90 is connected between the fourth node 34" and a fifth node 90'.

The second power interface 8 further comprises a fourth resistor 40 and a second capacitor 42, arranged in series to one anther. The series constituted by the third resistor 36 and the fifth switch 38 and the series constituted by the fourth resistor 40 and the second capacitor 42 are connected between the third electrical branch 30 and, respectively, the fourth node 34" and fifth node 90'. The fourth resistor 40 is also connected in parallel to a sixth switch 44 able to create, when closed, a short circuit that bypasses the fourth resistor 40. The opening and closing of the sixth switch 44 is directly controlled by the DC-DC conversion device 1, through a control connection 45, on the basis of whether or not it is necessary to charge the second capacitor 42.

In addition, a voltage detector 46 is connected in parallel to the series of the fourth resistor 40 and the second capacitor 42, and is configured to detect the voltage between the third electrical branch 30 and the fourth electrical branch 32 and provide the DC-DC conversion device 1 with this detected value (value indicated in the figure by reference M_{H}).

Lastly, by means of a current transducer 47 connected to the fifth node 90', the DC-DC conversion device 1 knows the current I_{H} that flows from and to the DC-DC conversion device 1.

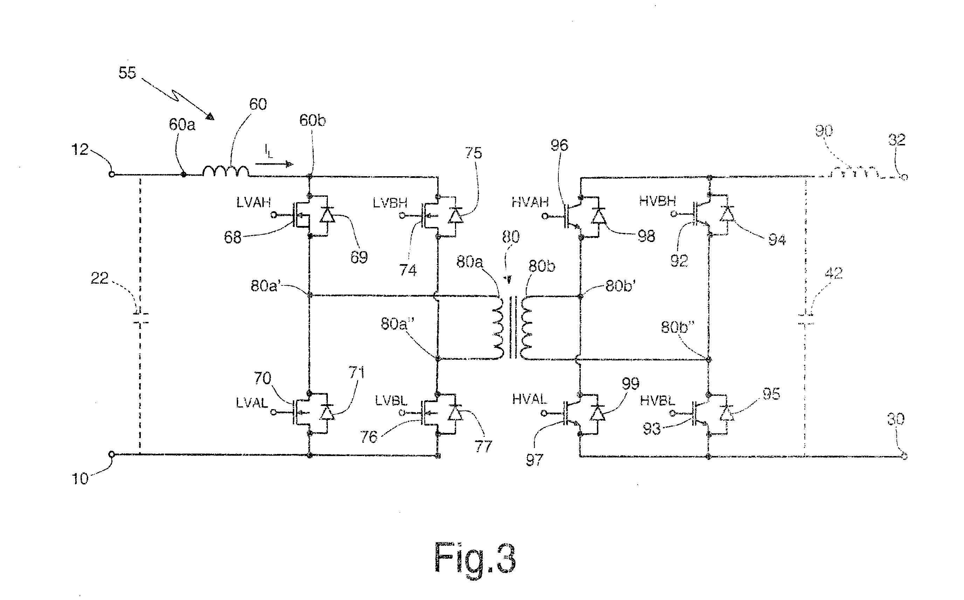

Figure 3 shows a circuit representation of a portion of the DC-DC conversion device 1. For simplicity of representation, Figure 3 does not show the logic control blocks, of known type, of the DC-DC conversion device 1, suitable for controlling the switching on and off of the transistors of the DC-DC conversion device 1 and the switches of the first power interface 6 and the second power interface 8 for operating in the boost and buck operating modes. The DC-DC conversion device 1 of Figure 3 comprises an isolated boost full bridge converter 55.

The input of the isolated boost full bridge converter 55 on the side of the voltage bus 2 comprises a current transducer 57. In this way, the DC-DC conversion device 1 knows the current I_{L} that flows in node 14". The isolated boost full bridge converter 55 further comprises, connected in series to the current transducer 57 on the second electrical branch 12, an inductor 60 having a first terminal 60a connected to the second node 14" and a second terminal 60b connecting the second node 14" with a branch comprising a transistor 68 and another transistor 70 connected in series to one another between the second terminal 60b and the first electrical branch 10. The inductor 60 is used in boost mode to perform a first increase in the voltage at the second terminal 60b of the inductor 60; vice versa, in buck mode, the inductor 60 together with the first capacitor 22 function as a LC filter in such a way as to eliminate the switching harmonics.

Each transistor 68 and 70 is equipped, in use, with a respective internal diode, respectively indicated in Figure as diode 69 and diode 71, connected in antiparallel to transistor 68 and transistor 70 respectively. Lastly, there is a branch comprising a transistor 74 and another transistor 76, in parallel to the branch comprising transistors 68 and 70. Transistor 74 and transistor 76 are connected in series to one another and connect the first electrical branch 10 to the second electrical branch 12. In use, they are equipped with a respective internal diode, respectively indicated in Figure as diode 75 and diode 77, connected between the conduction terminals of transistor 74 and of transistor 76 respectively.

The inductor 60 and the branches comprising transistor 68, transistor 70, transistor 74 and transistor 76 are connected to a winding 80a of a transformer 80. In particular, winding 80a comprises a first terminal 80a' connected between transistor 68 and transistor 70 and a second terminal 80a" connected between transistor 74 and transistor 76.

Each one of transistor 62, transistor 64, transistor 68, transistor 70, transistor 74 and transistor 76 is a power MOSFET transistor and has its own control terminal (gate terminal) with conduction and cutoff controlled by an appropriate signal.

The isolated full bridge converter 55 further comprises a transistor 92 and another transistor 93, arranged in series with each other and connected between the third electrical branch 30 and the fourth electrical branch 32, and respectively equipped, in use, with diode 94 and diode 95 (shown connected to the conduction terminals of transistor 92 and transistor 93 respectively); and a transistor 96 and another transistor 97 arranged in series with each other and connected between the third electrical branch 30 and the fourth electrical branch 32, and respectively equipped, in use, with diode 98 and diode 99 (shown connected to the conduction terminals of transistor 92 and transistor 93 respectively).

The branches comprising transistor 92, transistor 93, transistor 96 and transistor 97 are connected to winding 80b of the transformer 80. In particular, winding 80b comprises a first terminal 80b' connected between transistor 96 and transistor 97 and a second terminal 80b" connected between transistor 92 and transistor 93.

Each one of transistor 92, transistor 93, transistor 96 and transistor 97 is an IGBT-type transistor and has its own control terminal with conduction and cutoff controlled by an appropriate signal.

The DC-DC conversion device 1 of Figure 2 can comprise just one or a plurality of isolated boost full bridge converters 55 of the type shown in Figure 3. In this latter case, each isolated full bridge converter 55 is connected to the other isolated full bridge converters 55 in PIPO (Parallel Input Parallel Output) mode, forming a high-power DC-DC conversion device 1. For example, in the case where four isolated boost full bridge converters 55 are used, if each isolated boost full bridge converter 55 is configured to handle a power of say 3 kW, the total power handled by the DC-DC conversion device 1 will be 12 kW. By sharing a same input and a same output, each isolated full bridge converter 55 works with a fraction of the total power.

The bi-directional converter 100 can find application both as a boost converter and as a buck converter, and can be controlled in either of the operating modes.

The method described according to the present invention can be implemented to control a converter of the type described with reference to Figures 2 and 3, or to control any DC-DC converter as long as it possesses the following requirements: it must be possible to set zero power flow when required; the converter must be of the isolated type, for example by providing a coupling transformer (e.g., magnetic coupling), in order to enable the coexistence of a plurality of voltage sources on a same low or high voltage bus 2 and 4; and it must be possible to set the direction of the current and therefore the direction of power flow.

The isolation characteristic is important because of the high voltage step-up/step-down ratio. The magnetic coupling element (boost inductor) permits controlling the current of the individual cells of the converter and therefore the simultaneous operation of a plurality of cells on the same bus.

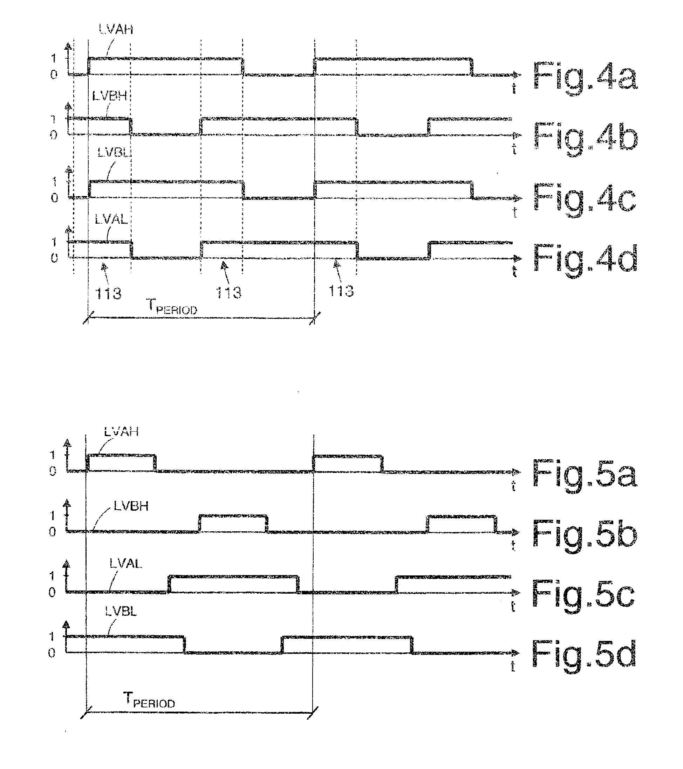

The control times of the transistors of the bi-directional converter 100 (with reference to the circuit diagrams of Figures 2 and 3) operating in voltage step-up mode shall now be described by way of example, with reference to Figures 4a-4d and 5a-5d.

Figures 4a-4d show the control signals of transistor 68 (signal LVAH), transistor 70 (signal LVAL), transistor 74 (signal LVBH) and transistor 76 (signal LVBL) with a duty cycle greater than 50%.

If the duty cycle of these signals is greater than 50%, in each period T_{PERIOD} there are one or more time intervals, indicated by reference numeral 113, where transistor 68, transistor 70, transistor 74 and transistor 76 are simultaneously on and charge the inductor 60.

Figures 5a-5d show the control signals of transistor 68 (signal LVAH), transistor 70 (signal LVAL), transistor 74 (signal LVBH) and transistor 76 (signal LVBL) with a duty cycle less than 50%.

If the duty cycle of signals LVAH and LVBH is less than 50%, it is possible to alternatively control the conduction and cutoff of transistors 68, 70, 74 and 76 so that the conditions in which both transistors 68 and 70 or both transistors 74 are 76 conduct electric current never arise. The importance of being able to work with duty cycles below 50% is linked to the fact that in this way it is possible to work in a "zero state", i.e. it is possible to set zero power flow. With reference to Figures 5a-5d, zero power flow is obtained when both the signal of Figure 5a and the signal of Figure 5b are null for the entire duration of the period (which corresponds to a zero duty cycle). This characteristic is useful to achieve shutdown of the DC-DC conversion device 1 without having to perform electrical disconnection of the low voltage bus 2.

Bearing in mind that there could be one or more voltage generators (not shown) on the high voltage bus 4, it is necessary that the DC-DC conversion device 1, when operating in step-up mode, guarantees the unidirectionality of current from the low voltage bus 2 to the high voltage bus 4 in a topological manner. This objective is achieved by controlling the cutoff of transistor 92, transistor 93, transistor 96 and transistor 97 connected to the high voltage bus 4. In this way the diodes (indicated in the figures as diode 94, diode 95, diode 98 and diode 99) inside the IGBTs (respectively transistor 92, transistor 93, transistor 96 and transistor 97) are exploited to rectify the output voltage from the transformer 80 (i.e. in output on the side of winding 80b) supplied to the high voltage bus 4.

With reference to the signals in Figures 4a-4d (duty cycle greater than 50%) and Figures 5a-5d (duty cycle less than 50%), transistor 96, transistor 68, transistor 76, transistor 92, transistor 74, transistor 70, transistor 97 and transistor 93 are driven by the respective signals HVAH, LVAH, LVBL, HVBH, LVBH, LVAL, HVAL and HVBL.

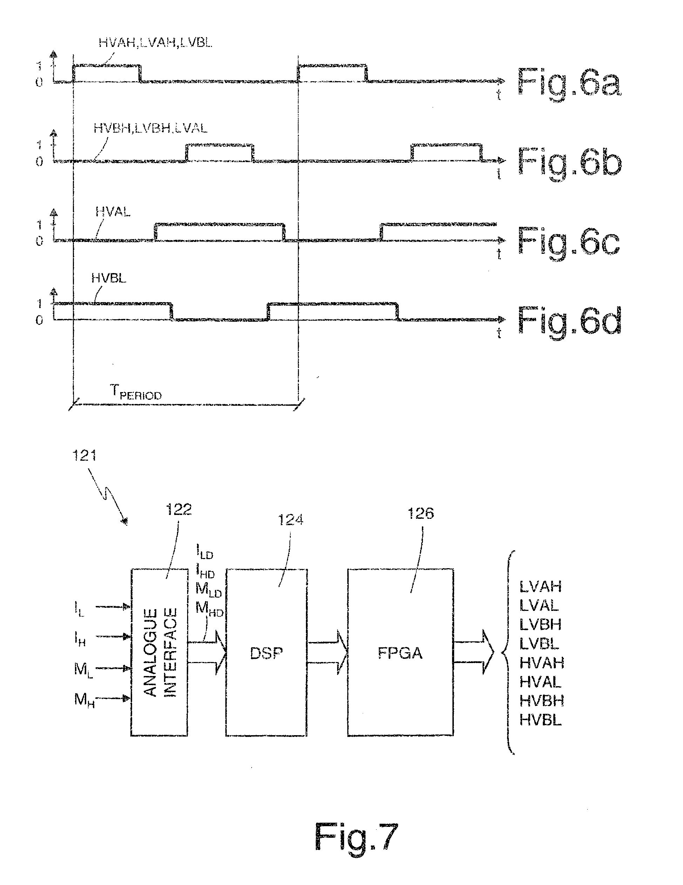

Figures 6a-6d show, by way of example, the control times of the transistors of the bi-directional converter 100 (with reference to the circuit diagrams of Figures 2 and 3), operating in voltage step-down mode (or buck mode).

In step-down mode, transistors 68, 70, 74 and 76 are controlled so as to make the bridge formed by these transistors function like a synchronous rectifier, in this way exploiting the current bi-directionality of MOSFET devices and consequently increasing efficiency. The inductor 60 and the first capacitor 22 (having the function of an output capacitor in step-down mode) form an LC filter, in this way limiting the maximum peak current upstream and downstream of the transformer 80. In fact, apart from the transformer ratio, the transformer has identical voltage and current waveforms both in input and in output. The LC filter is also useful or filtering the output voltage and consequently achieving an almost constant voltage trace (except for a small ripple). To this end, transistor 96, transistor 68, transistor 76, transistor 92, transistor 74, transistor 70, transistor 97 and transistor 93 are driven by the respective signals HVAH, LVAH, LVBL, HVBH, LVBH, LVAL, HVAL and HVBL, as shown in Figures 6a-6d.

From Figures 6a-6d, it can be deduced that the driving method for the transistors of the first power interface 6 and the second power interface 8 in buck mode is the same as the driving method for the transistors of the first power interface 6 and the second power interface 8 in Figures 5a-5d. In particular, the duty cycle of signals LVAH and LVBH, which control the conduction and cutoff of transistor 68 and transistor 70b respectively, is less than 50%.

Figure 7 shows, by means of a block diagram, the control and drive logic 121 of the DC-DC conversion device 1.

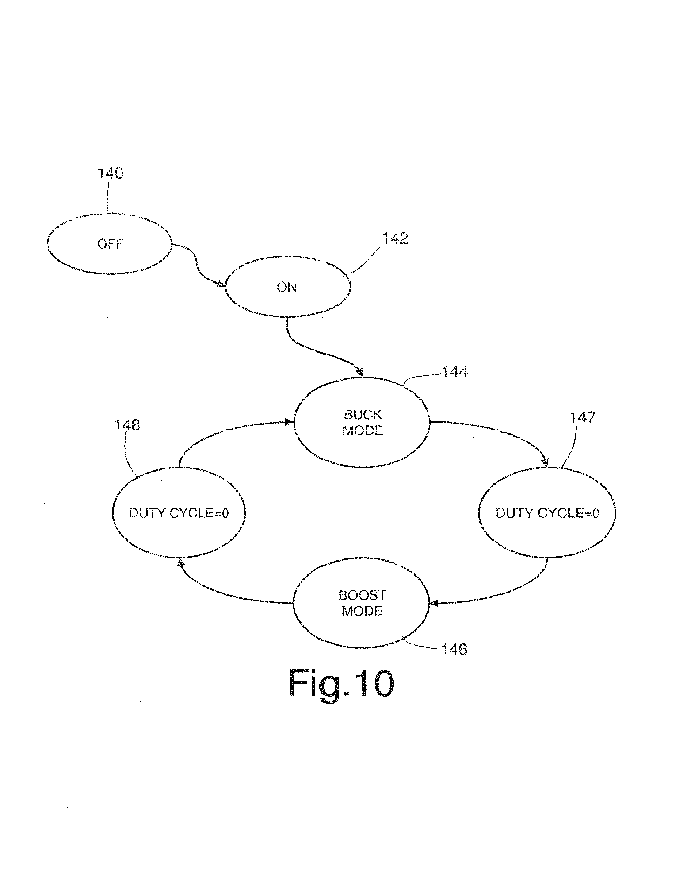

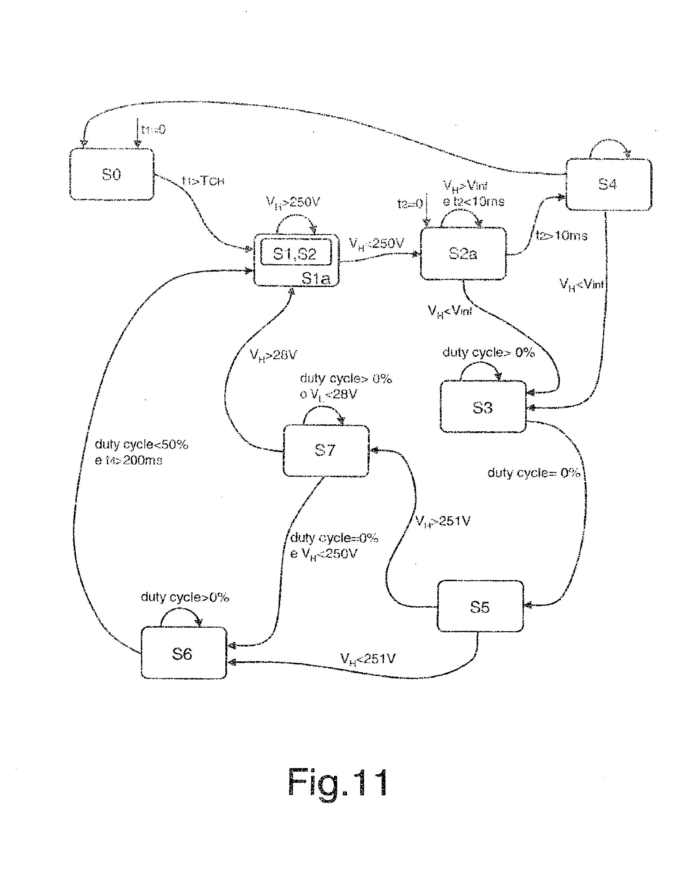

The control and drive logic 121 comprises an analogue signal conditioning interface 122, configured to receive currents T_{L}, I_{H} (from current transducers 57 and 47) and voltage values voltage M_{L}, M_{H} (from voltage detectors 26 and 46); a digital signal processor (DSP) 124, connected to the analogue interface 122 (the latter equipped with one or more A/D converters for the analogue to digital conversion of analogue quantities I_{L}, I_{H}, M_{L} and M_{H}, for subsequent processing) ; and a drive signal generator 126, for example an FPGA (Field Programmable Gate Array). The analogue interface 122 is configured to receive analogue signals as input (in particular, currents I_{L} and I_{H} and the voltage values M_{T}, and M_{H}) and generate respective digital output signals I_{LD}, I_{HD}, M_{LD} and M_{HD}, correlated to the analogue input signals received, and having a format such that they can be correctly interpreted by the digital signal processor 124. The digital processor 124 receives as input the digital signals I_{LD}, I_{HD}, M_{LD} and M_{HD} and controls the drive signal generator 126 so that the latter generates as output the drive signals LVAH, LVAL, LVBH, LVBL, HVAH, HVAL, HVBH and HVBL of the transistors belonging to the DC-DC conversion device 1 of Figure 3, as well as the drive signals of switches 14, 18 and 24 belonging to the first power interface 6 and the switches 34, 38 and 44 of the second power interface 8 of Figure 2. From the hardware standpoint, the analogue interface 122, the digital signal processor 124 and the drive signal generator 126 are of known types and are widely used in known buck/boost DC-DC converters. According to the present invention, the analogue interface 122, the digital signal processor 124 and the drive signal generator 126 implement a driving method for the bi-directional converter 100 in both buck mode and boost mode, and of passing between the two modes, of the type shown in Figures 10 and 11 and described with reference to these figures.

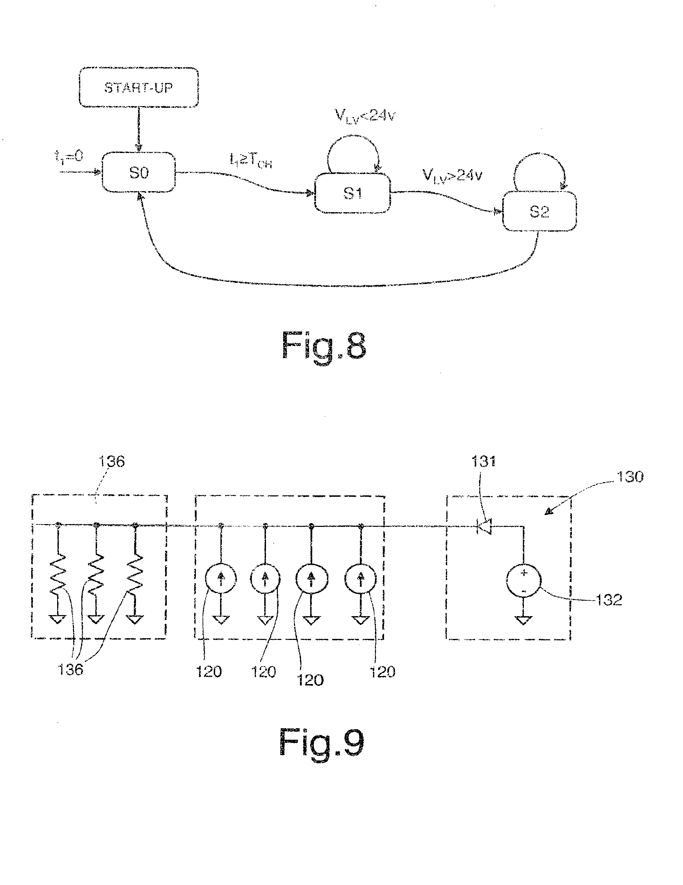

Figure 8 shows, by means of a state diagram, the operation of the bi-directional DC-DC converter 100 following the start-up step, according to the present invention.

In detail, on start up, the bi-directional DC-DC converter 100 is brought to state S0 and works in buck mode. In state S0, a time counter t1 is initialized with a reference value, for example the value of zero. The bi-direotional DC-DC converter 100 is maintained in state S0 for the time necessary to charge the second capacitor 42. The charging time T_{CH} of the second capacitor 42 is given by T_{CH}=10·R_{H}·C_{H} seconds, where R_{H} is the resistance value of the fourth resistor 40 and C_{H} is the capacitance value of the second capacitor 42. For the values R_{H}=100 Ω and C_{H}=0.2 mF, the charging time T_{CH} is approximately 100 ms.

The second capacitor 42 is used in buck mode as a power accumulator.

Following the charging of the second capacitor 42, the bi-directional DC-DC converter 100 leaves state S0 and enters state S1. In state S1, the sixth switch 44 is closed and the active step of DC-DC conversion starts (with reference to Figure 1, the bi-directional DC-DC converter 100 charges the battery 11).

The output voltage, in this case the voltage on the low voltage bus 2, is controlled and maintained stable by controlling, in a known manner, the duty cycle for driving transistors 68, 70, 74, 76, 92, 93, 96 and 97 of the bi-directional DC-DC converter 100. The duty cycle is therefore varied to maintain the voltage value at a desired level, within a range of preset values.

As long as the voltage V_{L}, measured by the voltage detector 26 on the low voltage bus 2, is less than a preset threshold value, for example 24 V, the bi-directional DC-DC converter 100 remains in state S1 and works in buck mode. When the voltage detector 26 measures a voltage V_{L} on the low voltage bus 2 higher than the preset threshold value, for example more than 24V, state S2 is entered. As long as the be-directional DC-DC converter 100 remains in state S2, the necessary protections are active to avoid damage to the be-directional DC-DC converter 100. These protections have the function of preventing, or at least reducing, possible problems of undervoltage and/or overvoltage and are set via software in firmware on board the bi-directional DC-DC converter 100 (or connected to it). For example, if the voltage measured on the low voltage bus 2 remains at a value lower/higher than an acceptable minimum/maximum (for example, less than 24 V or more than 32 V) for a sufficiently long period of time (i.e. no longer in compliance with a predetermined standard), the bi-directional DC-DC converter 100 is declared to be at fault. In this case, the duty cycle is controlled to gradually drop to zero. When these protections are not active, the converter operates regularly in state S2.

The following Table 1 shows, according to an example of embodiment, normal operation and abnormal operation voltage ranges of the bi-directional DC-DC converter 100, in input to and output from the bi-directional DC-DC converter 100 operating in buck mode.

**Table 1**

| **Input (high voltage bus 4)** | **Output (low voltage bus 2)** |
|---|---|
| Normal DC voltage: | Normal DC voltage: |
| 250 - 280 V | 24 - 32 V |
| Abnormal DC voltage: | Abnormal DC voltage: |
| <250 V and >280 V | <24 V and >32 V |
| Max current: 30 A | Max current: 250 A |
| | Rated DC voltage: 28 V |
| | DC voltage ripple: |
| | ± 1.5 V |
| | Max requested power: 6 kW |
| | Efficiency: > 83% |

When a voltage value outside the limits indicated in Table 1 is detected (abnormal voltage on the low voltage bus 2 and/or the high voltage bus 4), the bi-directional DC-DC converter 100 is shut down by controlling the duty cycle down to zero. At the same time, state S2 is exited and return made to state S0. The bi-directional DC-DC converter 100 remains in state S0 until an opportune reset signal for the entire electrical system arrives. The reset signal can arrive from a PEPDC (Primary Electrical Power Distribution Center, not shown), which is the control and distribution centre for power flow throughout the entire electrical network 3 of which bi-directional DC-DC converter 100 is part. The effect of the reset signal is the cancelation of all fault warnings on the bi-directional DC-DC converter 100 and, in consequence, the possibility of performing a new start-up sequence for normal running operations of the bi-directional DC-DC converter 100 in boost mode or buck mode.

The transition from state S2 to state S0 can also be caused by disconnection of the PEPDC (Primary Electrical Power Distribution Center), or due to a request to halt operations made by an operator.

As mentioned, according to the present invention, it is possible to use bi-directional DC-DC converters other than the bi-directional DC-DC converter 100 of Figures 2 and 3, provided that these converters possess certain requisites. The bi-directional DC-DC converter used must be such as that it is possible to set a zero power flow when requested (for example, as mentioned, when controlling the duty cycle down to zero); the circuit implementing the bi-directional DC-DC converter must provide coupling means (for example, transformer 80 of Figure 3) so as to permit the coexistence of a plurality of sources with mutually different voltages on the same bus; and must be possible to set, when necessary, a current flow direction and therefore set the direction of power flow.

The aforesaid conditions are satisfied by the embodiment of Figures 2 and 3. When operated in boost mode, the bi-directional DC-DC converter 100 can be schematized by means of a current generator. Alternatively, in the case where the DC-DC conversion device 1 adopts a cellular architecture (i.e. comprising a plurality of isolated full bridge converters 55), by means of a plurality (N) of current generators 120 electrically connected in parallel to one another as shown in Figure 9.

The current generators 120 are also connected in parallel to a primary voltage source 130 (schematized in Figure 3 as a voltage generator 132 connected in parallel to the current generators 120 through a diode element 131 and representing the high voltage bus 4), avoiding the connection of two voltage generators in parallel, which, as is known, is not topologically permitted in electrical systems. Lastly, Figure 9 shows a load, for example a resistive load 135 schematized by a plurality of resistors 136, connected in parallel to the current generators 120. The resistors 136 represent generic loads connected to the high voltage bus 4.

With reference to Figure 9, if the bi-directional DC-DC converter 100 operating in boost mode wanted to set a voltage, for example and with reference to Table 1, of 270 V on a high voltage bus 4 already powered by a second generator, a conflict would be created due to the impossibility of having two voltage sources in parallel on the same node. Instead, if the bi-directional DC-DC converter 100 in boost mode does not set a voltage, but injects current on high voltage bus 4, the latter will no longer become overloaded and its voltage would automatically return to the rated value of 270 V, set by the second generator.

Figure 10 shows, by means of a state diagram, the operating states of the bi-direational DC-DC converter 100. With reference to this figure, following the start-up step (passage from the off state 140 to the on state 142), the bi-directional DC-DC converter 100 operates, as said, according to the normal control typical of buck mode (state 144), but is able to automatically switch to boost mode (state 146) when overload is detected on the high voltage bus 4, and therefore a problem of power quality on the power delivered (abnormal voltage on the high voltage bus 4, for example less than 250 V with reference to Table 1).

When the condition of optimal voltage has been re-established on the high voltage bus 4 (the voltage has returned to normal values, for example between 250 and 280 V), the bi-directional DC-DC converter 100 returns to state 144 (i.e. it returns to operating in buck mode). The passage between the buck mode 144 and boost mode 146 states and vice versa takes place by transiting through a respective passage state 147 and 148. The bi-directional DC-DC converter 100 automatically switches between the buck mode state 144 and the boost mode state 146 depending on the overload conditions of the electrical network 3, and does not need an explicit command generated externally to the converter; the switching between states 144 and 146 is therefore "transparent" to the user, as the user does not need to manually select the operating mode, it being the bi-directional DC-DC converter 100 itself that selects it on the basis of the voltage measurements V_{L} and V_{H}. The passage between states 144 and 146 takes place, as better described further on, by decreasing the duty cycle from the normal running value (e.g., 35% for buck mode and 70% for boost mode, variable and adjustable according to the normal control of an operating DC-DC converter, in a known manner, in buck and boost modes) down to 0%, and then increasing it again to the normal running value in the other operating mode.

Figure 11 shows the operating states of the bi-directional DC-DC converter 100 in greater detail.

In particular, after switching on, the bi-directional DC-DC converter 100 enters start-up state S0 in Figure 11. This state corresponds to the state S0 already described with reference to Figure 8. Upon leaving state S0, the bi-directional DC-DC converter 100 enters state S1a of operation in buck mode. State S1a in Figure 11. corresponds to states S1 and S2 in Figure 8 and in consequence is not described further herein. In this case, however, exiting state S2 does not lead to state S0 again as shown in Figure 8, but leads to state S2a.

The voltage detector 46 takes a measurement of the voltage value V_{H} on the high voltage bus 4. The bi-directional DC-DC converter 100 remains in state S1a as long as the voltage value V_{H} on the high voltage bus 4 stays within the normal range (refer to the foregoing Table 1). When the voltage V_{H} on the high voltage bus 4 drops below a minimum threshold (for example V_{H}<250 V), the bi-directional DC-DC converter 100 leaves state S1 and enters state S2a. Entering state S2a starts a time counter t2. The bi-directional DC-DC converter 100 remains in state S2a as long as voltage value V_{H} on the high voltage bus is below the lower limit of the normal range (250 V with reference to Table 1) but above a minimum acceptable value V_{inf} (for example, set to 200 V) and, at the same time, the time counter t2 has a value below a threshold value tₜₕ₁, for example 10 ms. The threshold tₜₕ₁ can be different from the value indicated here and be chosen in accordance with the a particular standard. In the case described, threshold tₜₕ₁ has been chosen with reference to the specifications of the MIL-STD-704F standard, in particular with reference to the minimum acceptable value V_{inf}=200 V at time t2=0 ms. In accordance with that ideally set by this standard, the voltage V_{H} on the high voltage bus 4 can remain at this minimum acceptable value V_{inf} for a maximum time of t2=10 ms, and then ramps up for t2 between 10 ms and 40 ms, until it reaches the value of 250 V in t2=40 ms and changes no further.

There are two conditions under which state S2a is exited. In a first condition, if the voltage V_{H} on the high voltage bus 4 has a value higher than the minimum acceptable value V_{inf} but the time counter t2 reaches a value higher than the threshold value tₜₕ₁, then state S2a is left for state S4 for power quality control. In a second conditions, if the voltage V_{H} on the high voltage bus 4 takes a value lower than the minimum acceptable value V_{inf} before the time counter t2 takes a value higher than the threshold value tₜₕ₁, then control passes from state S2a to state S3 for the passage from buck mode to boost mode. In this case, the high voltage bus 4 is overloaded and the bi-directional DC-DC converter 100 supplies it with power taken from the low voltage bus 2 (in particular, from the battery 11).

Returning to state S4, the bi-directional DC-DC converter 100 remains in state S4 for a preset time interval, for example between 10 ms and 40 ms. To this end, entering state S4 starts a time counter t4. If after time t4=40 ms the voltage V_{H} on the high voltage bus 4 has risen to within the normal range of values (for example, above 250 V), the bi-directional DC-DC converter 100 returns to state S0 (and therefore resumes operation in buck mode). Otherwise, if the voltage V_{H} on the high voltage bus 4 remains below the normal range during the entire preset time interval or, in particular, if it has falls below the minimum acceptable value V_{inf}, the bi-directional DC-DC converter 100 passes from state S4 to state S3.

State S3 handles abandoning buck mode and entering boost mode. To this end, the value of the duty cycle driving the DC-DC conversion device 1 is progressively bought down to zero (in this way controlling the switch-off of the bi-directional DC-DC converter 100). When the zero duty cycle value is reached, the bi-directional DC-DC converter 100 leaves state S3 and enters state S5. In state S5, the voltage V_{H} on the high voltage bus 4 is measured again by the voltage detector 46. The voltage value V_{H} measured during the permanence of the bi-directional DC-DC converter 100 in state S5 is compared with a threshold voltage value Vp close to, but just above the lower threshold of the normal operating range. For example, considering this lower threshold value as 250 V, Vₚ is, for example, equal to 251 V. The purpose of this check is to verify if the cause of the voltage drop on the high voltage bus 4 is the bi-directional DC-DC converter 100 itself. In fact, during operation in buck mode, the bi-directional DC-DC converter 100 is seen as a load on the high voltage bus 4 and therefore it could be the cause of overload on the high voltage bus 4. Therefore, if the measured voltage V_{H} is found to be higher than minimum value of the normal operating range (for example, 251 V), the bi-directional DC-DC converter 100 leaves state S5 and enters state S7. Alternatively, in the case where the measured voltage V_{H} is lower than the minimum value of the normal operating range (below 251 V), the bi-directional DC-DC converter 100 leaves state S5 and enters state S6.

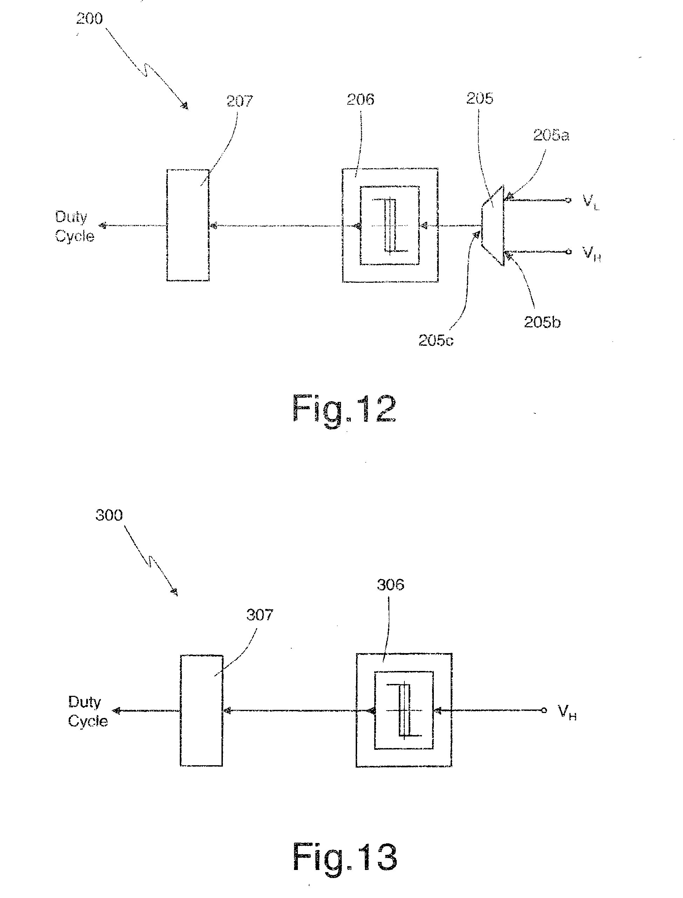

In state S7, the bi-directional DC-DC converter 100 is set to operate in buck mode again and operations are controlled by using the hysteresis controller 200 of Figure 12 (described in the following with reference to this Figure). The reestablishment of a voltage value V_{H} higher than the minimum value of the normal operating range (V_{H}>251 V) permits the bi-directional DC-DC converter 100 to operate in buck mode again. To this end, the duty cycle, previously controlled down to zero (in state S3), is increased. At the same time, both voltage V_{H} and voltage V_{L} are monitored. In particular, the duty cycle is controlled to reach a value that maintains voltage V_{L} below the maximum value of normal operation (therefore below 28 V with regards to consistency with the previous examples). This control is performed after a stabilization period of the electrical network 3, for example, 400 ms starting from when the bi-directional DC-DC converter 100 enters state S7, to allow the correct operability of the latter to be re-instated after leaving state S3, where the DC-DC conversion device 1 (and consequently the bi-directional DC-DC converter 100) was switched off by controlling the duty cycle driving the transistors down to zero. However, if voltage V_{H} drops below the lower threshold value of normal operation (below 250 V, for consistency with the previous examples) while in state S7, the duty cycle is decreased again, until it reaches zero. In this latter case, state S7 is exited and state S6 entered. Vice versa, if after waiting for the stabilization period of the electrical network 3 (chosen, as said, equal to 400 ms), voltage V_{L} on the low voltage bus 2 exceeds the maximum value of normal operation (above 28 V), then state S7 is exited and return made to state S1a. In state S6, the bi-directional DC-DC converter 100 operation is controlled in boost mode. Control of the duty cycle in boost mode is performed by the hysteresis controller 300 of Figure 13 (described in the following with reference to this figure). In state S6, in boost mode, the duty cycle is incremented (and, if necessary, decremented) to keep the voltage on the high voltage bus 4 within the limits of normal operation (see Table 1). The bi-directional DC-DC converter 100 remains in state S6 for a time at least as long as a preset time interval, for example time t4=200 ms, to allow the system as a whole to stabilize itself and allow the bi-directional DC-DC converter 100 to run regularly. The exit condition for state S6, evaluated after a period of 200 ms from entering state S6, depends on the value of the duty cycle regulated by the hysteresis controller 300; if the duty cycle value drops below 50% it is no longer advisable to operate in boost mode, as the voltage value supplied to the high voltage bus 4 is not considered significant. In this latter case, state S6 is exited and return made to state S1a, restoring buck mode operation on the bi-directional DC-DC converter 100.

Figure 12 shows a circuit for the hysteresis control of the duty cycle in buck mode. The hysteresis controller 200 of Figure 12 comprises a multiplexer 205 that receives the voltage value V_{L} measured on the low voltage bus 2 on a first input 205a and the voltage value V_{H} measured on the high voltage bus 4 on a second input 205b, and generates as output both of the signals present on the inputs 205a and 205b for evaluation of the hysteresis conditions. The output signal from the multiplexer 205 is provided as input to block 206, which uses hysteresis on the voltage of the high voltage 4 and voltage 2 buses to vary the duty cycle. The output of block 206 is provided as input to an integrator 207, which generates a duty cycle value as output.

The output from block 206 is a logic signal that takes a high logic value "1" and a low logic value "-1". The integrator 207 is defined by a gain K and the Laplace variable S. The final duty cycle, in output from the integrator 207, gradually ramps up if the output logic signal from block 206 has the increment value ("+1") and gradually ramps down if the output logic signal from block 206 has the decrement value ("-1"). The duty cycle can, for example, be expressed in a 12-bit digital format, and in this case takes values from 0 (duty cycle at 0%) to 2¹² (duty cycle at 100%). Thus, if the output from block 206 has the high logic value "+1", on each clock cycle, the duty cycle increases by 1 unit on the scale from 0 to 2¹².

In use, if voltage value V_{H} is higher than the minimum value of normal operation (for example, with reference to Table 1, V_{H}≥252 V) and at the same time voltage V_{L} is below the rated value (for example, with reference to Table 1, V_{L}<28 V), block 206 controls incrementing the value of the duty cycle by a preset unitary value, (for example +1). Vice versa, if voltage value V_{H} is less than 252 V (for consistency with the previous example), for example V_{H}≤251 V or, alternatively, voltage V_{L} is higher than 28 V, for example V_{L}>28.3 V, block 206 controls decrementing the value of the duty cycle by a preset value (for example -1).

It can be noted how the hysteresis controller 200 controls decrementing the duty cycle if the measured voltage is instantaneously below the threshold value, set to 251 V in this example. The condition of incrementing the duty cycle refers to the condition where the voltage on the high voltage bus 4 is higher than a value greater than a minimum threshold, set to 252 V in the previous example, and, at the same time, the voltage on the low voltage bus 2 is less than 28 V, chosen as the control voltage in the previous example; in this case it is possible to perform partial charging of the battery by increasing the duty cycle.

Instead, if the bi-directional DC-DC converter 100 is imposing a voltage higher than the control one, i.e. equal to or greater than 28 V increased by 0.3 V in the example described, the duty cycle is decreased.

Figure 13 shows a circuit for hysteresis control of the duty cycle in boost mode. The hysteresis controller 300 of Figure 13 comprises a block 306 configured to receive as input the voltage value V_{H} present on the high voltage bus 4 and generate as output a control value for incrementing or decrementing the duty cycle. The output signal from block 306 is then provided in input to an integrator 30, which generates a duty cycle value as output.

In use, the duty cycle is increased if voltage V_{H} is less than the minimum value of normal operation (with reference to Table 1, if V_{H}<250 V); vice versa, the duty cycle is decreased if voltage V_{H} is greater than a threshold set inside the normal operating range, for example equal to 265 V.

It is evident that, although having made reference in the described embodiments to a minimum value for normal operation of 250 V, it might be advisable to use a voltage value higher than the minimum value, for example 260 V. This guarantees greater stability of the system, enabling the converter to react in time to voltage drop events on the high voltage bus 4.

The advantages that can be achieved with the method developed according to the present invention are evident from examination of its characteristics.

In fact, the method proposed according to the present invention permits the transitions between voltage step-down and step-up modes for a DC-DC converter to be handled in an intelligent manner, from the perspective of obtaining a conversion device capable of supporting the high-voltage electrical bus in cases where the latter is overloaded and of instead charging the power accumulator connected to the low voltage bus when normal conditions exist with reference to measurable voltage on the high-voltage side. This handling is automatic, achieving the advantage of avoiding the need for an operator to manually choose the operating mode; this is permitted by the circuit topology of the converter, which is able to handle bi-directional power flows. In addition, the chosen control strategy permits using the converter as a current and not a voltage generator, achieving a further advantage by solving the known problem of using two voltage generators in parallel on a bus, which can create situations of instability due to the unpredictable behaviour of two generators regarding the delivery of the power necessary to feed the loads present on the bus. By means of the method according to the present invention, the converter provides part of the power needed to support operation of the loads powered, by the high voltage bus in the form of current, supplied to restore the voltage level usable by the bus, achieving the advantage of being able to continue using the main generator supplying power to the bus at 270 V (which, through overloaded, can power part of the loads present) alongside the converter in generator mode.

Furthermore, the converter subject of the present invention selects buck, boost or reduced buck/boost modes without operator intervention and/or without the need of control via an external signal, but by comparing the voltages of interest and the measured current values with reference thresholds. In this way, the control logic always ensures the best operating mode with respect to the overall state of the converter and, in particular, the voltage values measured on the buses.

In addition, the flow of power is, as described, bi-directional. This is an intrinsic characteristic of the DC-DC converter according to the present invention. To the contrary, it should be noted that in known types of converters the bi-directionality of current is opportunely avoided to ensure safety in the operating steps.

Lastly, thanks to the circuit topology and the associated control method, the converter according to the present invention is able, thanks to its circuit topology, to set a. desired power flow instant-by-instant and is also able to set a zero power flow when the duty cycle is 0% for a period of time necessary to reconfigure the converter to invert the power flow. In this way, bi-directional usage is achieved in a safe manner. It should be noted that the passage between the voltage step-up mode and that of step-down cannot be obtained by simply disabling the switches when the duty cycle is greater than 0%. This would in fact cause severe electrical damages to the converter. Instead, as described, it is referable to reduce the value of the duty cycle by preset steps down to zero before performing the passage between the voltage step-up mode and that of step-down, and vice versa. In fact, by acting in accordance with the method of the present invention, the current in the boost inductor is reduced to a null value before the passage between the two operating modes is performed, thereby avoiding overvoltage phenomena being caused on the switches of the full bridge.

Finally, it is understood that changes and modification may be made to the method described and illustrated herein without leaving the scope of protection of the present invention, as defined in the appended claims.

The values of the threshold V_{inf} and the timer of state S2a can be modified according the definition of the standard to be respected (to the extent that states S2a and S4 could be eliminated, checking just the instantaneous value of the voltage), as can the threshold for passage from state S5 to state S6 or state S7. In addition, the hysteresis controllers of Figure 12 and Figure 13 can also be modified, increasing or decreasing the value of constant K for the integrator so as to accelerate or decelerate the ramp rate of the duty cycle, and also the width of the optimal bands for the voltage of the high-voltage and low-voltage buses.

Furthermore, the method according to the present invention can be applied to different types of converters from that shown, for example half-bridge converters, or three-phase converters, or converters with a center-tap transformer, or yet other converters.

## Claims

1. A method of controlling a bi-directional DC-DC converter (100) connectable between a high voltage bus (4) and a low voltage bus (2) for passing from a first operating mode (144) in which high voltage is converted to low voltage and a second operating mode (146) in which low voltage is converted to high voltage, comprising the steps of:
- controlling (S1a) the bi-directional DC-DC converter (100) in the first or in the second operating mode with a duty cycle having a value greater than 0%;
- measuring (S2) a first voltage (V_{H}) present on the high voltage bus (4);
- measuring (S1) a second voltage (V_{L}) present on the low voltage bus (2);
- automatically controlling (147), on the basis of said first and second measured voltages, passage of the bidirectional DC-DC converter (100) from the first operating mode to the second operating mode or from the second operating mode to the first operating mode,
**characterized by** further comprising, before controlling the passage from the first operating mode to the second operating mode, the steps of:
- continuously measuring (S4) during a first preset time interval (t2), the voltage (V_{H}) present on the high voltage bus (4);
- comparing (S4) the voltage (V_{H}) measured on the high voltage bus (4) with a first threshold value (V_{inf}); and
- verifying (S4) whether, within the first time interval (t2), the voltage (V_{H}) on the high voltage bus (4) takes a value lower than the first threshold value (V_{inf}) and, if so, controlling (147; S3, S4) the passage of the bi-directional DC-DC converter (100) from the first operating mode to the second operating mode,
the step of controlling (147) said passage including decreasing (S3) the duty cycle by preset steps until a duty cycle value of 0% is reached.

2. The method according to claim 1, wherein said step of controlling (147) the passage from the first operating mode to the second operating mode comprises, at the end of said step of decreasing the duty cycle, the step of increasing the duty cycle by preset steps to operate said second operating mode.

3. The method according to claim 1 or 2, wherein said step of controlling (147) the passage from the second operating mode to the first operating mode comprises, at the end of said step of decreasing the duty cycle, the step of increasing the duty cycle by preset steps to operate said first operating mode.

4. The method according to any of the preceding claims, further comprising, during the second operating mode (146), the steps of:
- continuously measuring (S6) the voltage (V_{H}) present on the high voltage bus (4);
- comparing (S6) the voltage (V_{H}) measured on the high voltage bus (4) with a first range of preset optimal operating values;
- on the basis of said comparison of the voltage (V_{H}) measured on the high voltage bus (4) with the first range of preset optimal operating values, increasing (S6) or decreasing (S6) the value of the duty cycle by preset steps to maintain the first voltage value (V_{H}) within the first range of preset optimal operating values.

5. The method according to any of the preceding claims, further comprising, during the first operating mode (144), the steps of:
- continuously measuring (S7) the voltage (V_{L}) present on the low voltage bus (2);
- comparing (S1a; S1, S2) the voltage (V_{L}) measured on the low voltage bus (2) with a second range of preset optimal operating values;
- on the basis of said comparison of the voltage (V_{L}) measured on the low voltage bus (2) with the second range of preset optimal operating values, increasing (S7) or decreasing (S1a; S1, S2) the value of the duty cycle by preset steps to maintain the first voltage value (V_{L}) within the second range of preset optimal operating values.

6. The method according to any one of the preceding claims, wherein said step of controlling (147; S3, S4) the passage of the bi-directional DC-DC converter (100) from the first operating mode to the second operating mode further comprises the steps of:
- continuously measuring (S5) the voltage (V_{H}) present on the high voltage bus (4);
- comparing (S5, S7) the voltage (V_{H}) measured on the high voltage bus (4) with a second threshold value (Vₚ) higher than the first threshold value (V_{inf}) ;
- if the voltage (V_{H}) measured on the high voltage bus (4) is higher than the second threshold value (Vp), maintaining (S7) the bi-directional DC-DC converter (100) in the first operating mode;
- if the voltage (V_{H}) measured on the high voltage bus (4) is lower than the second threshold value (Vp), completing (S5, S6) the passage from the first operating mode to the second operating mode by controlling the bi-directional DC-DC converter (100) in the second operating mode.

7. The method according to any of the preceding claims, wherein step of controlling (148) the passage from the second operating mode to the first operating mode further comprises the steps of:
- maintaining (S6) the bi-directional DC-DC converter (100) in the second operating mode for a second preset time interval;
- continuously detecting (S6), at the end of the second time interval (t3), the value of the duty cycle during said second operating mode;
- comparing (S6) the detected duty cycle value with a threshold duty cycle value;
- if the detected duty cycle value is lower than the duty cycle threshold value, controlling (S6, S1a) the passage from the second operating mode to the first operating mode.

8. A bi-directional DC-DC converter (100) connectable between a high voltage bus (4) and a low voltage bus (2) for passing from a first operating mode (144) in which high voltage is converted to low voltage and a second operating mode (146) in which low voltage is converted to high voltage, comprising:
- a first voltage meter (26) configured to measure a first voltage (V_{H}) present on the high voltage bus (4);
- a second voltage meter (46) configured to measure a second voltage (V_{L}) present on the low voltage bus (2);
- a control logic (121) configured to control (S1a) the bi-directional DC-DC converter (100) in the first or in the second operating mode with a duty cycle having a value greater than 0%; control (147), on the basis of said first and second measured voltage, passage of the bi-directional DC-DC converter (100) from the first operating mode to the second operating mode or from the second operating mode to the first operating mode,
**characterized in that** the first voltage meter (26) is further configured to measure (S4), continuously and during a first preset time interval (t2), the voltage (V_{H}) present on the high voltage bus (4), and
the control logic (121) is further configured to, before controlling a passage from the first operating mode to the second operating mode of the bi-directional DC-DC converter (100) :
- compare (S4) the voltage (V_{H}) measured on the high voltage bus (4) with a first threshold value (V_{inf}) ;
- verify (S4) whether, within the first time interval (t2), the voltage (V_{H}) on the high voltage bus (4) takes a value lower than the first threshold value (V_{inf}), and, if affirmative, to control (147; S3, S4) a passage of the bi-directional DC-DC converter (100) from the first operating mode to the second operating mode; and
decreasing (S3) the duty cycle by preset steps until a duty cycle value of 0% is reached.

9. The converter according to claim 8, wherein the control logic (121) is further configured, at the end of said step of decreasing the duty cycle, to increase the duty cycle by preset steps to perform the passage from the first operating mode to the second operating mode.

10. The converter according to claim 8 or 9, wherein the control logic (121) is further configured, at the end of said step of decreasing the duty cycle, to increase the duty cycle by preset steps to perform the passage from the second operating mode to the first operating mode.

11. The converter according to any of claims 8-10, wherein the first voltage meter (26) is further configured to continuously measure the voltage (V_{H}) present on the high voltage bus (4), and
the control logic (121) is further configured to:
- compare (S6) the voltage (V_{H}) measured on the high voltage bus (4) with a first preset range of optimal operating values;
- on the basis of said comparison of the voltage (V_{H}) measured on the high voltage bus (4) with the first preset range of optimal operating values, increase (S6) or decrease (S6) the value of the duty cycle by preset steps to maintain the first voltage value (V_{H}) within the first preset range of optimal operating values.

12. The converter according to any of claims 8-11, wherein the second voltage meter (46) is further configured to measure, continuously and during the first operating mode, the voltage (V_{L}) present on the low voltage bus (2), and
the control logic (121) is further configured to:
- compare (S1a; S1, S2) the voltage (V_{L}) measured on the low voltage bus (2) with a second preset range of optimal operating values;
- on the basis of said comparison of the voltage (V_{L}) measured on the low voltage bus (2) with the second preset range of optimal operating values, increase (S7) or decrease (S1a; S1, S2) the. value of the duty cycle by preset steps to maintain the first voltage value (V_{L}) within the second preset range of optimal operating values.

13. The converter according to any one of claims 8-12, wherein the second voltage meter (46) is further configured to continuously measure (S5) the voltage (V_{H}) present on the high voltage bus (4), and
the control logic (121) is further configured to:
- compare (S5, S7) the voltage (V_{H}) measured on the high voltage bus (4) with a second threshold value (Vp) higher than first threshold value (V_{inf}) ;
- if the voltage (V_{H}) measured on the high voltage bus (4) is higher than second threshold value (Vp), maintain (S7) the bi-directional DC-DC converter (100) in the first operating mode;
- if the voltage (V_{H}) measured on the high voltage bus (4) is below the second threshold value (Vp), complete (S5, S6) the passage from the first operating mode to the second operating mode by controlling the bi-directional DC-DC converter (100) in the second operating mode.

14. The converter according to any of claims 8-13, wherein the control logic (121) is further configured, during the step of controlling (148) the passage from the second operating mode to the first operating mode, to:
- maintain (S6) the bi-directional DC-DC converter (100) in the second operating mode for a second preset time interval (t3) ;
- continuously detect (S6), from the end of the second time interval (t3), the value of the duty cycle during said second operating mode;
- compare (S6) the detected duty cycle value with a duty cycle threshold value;
- if the detected duty cycle value is less than the duty cycle threshold value, control (S6, S1a) the passage from the second operating mode to the first operating mode.

## Patentansprüche

1. Verfahren zum Steuern eines bidirektionalen Gleichstromumwandlers (100), der zwischen einem Hochspannungsbus (4) und einem Niederspannungsbus (2) zum Übergang von einem ersten Betriebsmodus (144), in welchem Hochspannung zu Niederspannung umgewandelt wird, und einem zweiten Betriebsmodus (146), in welchem Niederspannung in Hochspannung umgewandelt wird, verbindbar ist, mit den Schritten:
- Steuern (S1a) des bidirektionalen Gleichstromumwandlers (100) in dem ersten oder in dem zweiten Betriebsmodus mit einem Betriebszyklus mit einem Wert von größer als 0%;
- Messen (S2) einer ersten Spannung (V_{H}), die an dem Hochspannungsbus (4) anliegt;
- Messen (S1) einer zweiten Spannung (V_{L}), die an dem Niederspannungsbus (2) anliegt;
- automatisches Steuern (147) auf der Basis der ersten und zweiten gemessenen Spannungen des Übergangs des bidirektionalen Gleichstromumwandlers (100) von dem ersten Betriebsmodus zu dem zweiten Betriebsmodus oder von dem zweiten Betriebsmodus zu dem ersten Betriebsmodus,
**dadurch gekennzeichnet, dass** es ferner vor dem Steuern des Übergangs von dem ersten Betriebsmodus zu dem zweiten Betriebsmodus die Schritte aufweist:
- kontinuierliches Messen (S4) während eines ersten voreingestellten Zeitintervalls (t2) der Spannung (V_{H}), die an dem Hochspannungsbus (4) anliegt;
- Vergleichen (S4) der Spannung (V_{H}), die an dem Hochspannungsbus (4) gemessen wird, mit einer ersten Grenzspannung (V_{inf}); und
- Überprüfen (S4) ob, innerhalb des ersten Zeitintervalls (t2), die Spannung (V_{H}) an dem Hochspannungsbus (4) einen Wert annimmt, der niedriger ist als der erste Grenzwert (V_{inf}) und falls dies der Fall ist, Steuern (147; S3, S4) des Übergangs des bidirektionalen Gleichstromumwandlers (100) von dem ersten Betriebsmodus zu dem zweiten Betriebsmodus,
Steuern (147) des Übergangs einschließlich Verringern (S3) des Betriebszyklus durch voreingestellte Schritte, bis ein Betriebszykluswert von 0% erreicht ist.

2. Verfahren nach Anspruch 1, wobei der Schritt des Steuerns (147) des Übergangs von dem ersten Betriebsmodus zu dem zweiten Betriebsmodus an dem Ende des Schrittes des Verringerns des Betriebszyklus den Schritt aufweist, den Betriebszyklus durch voreingestellte Schritte zu verringern, um den zweiten Betriebsmodus zu betreiben.

3. Verfahren nach Anspruch 1 oder 2, wobei der Schritt des Steuerns (147) des Übergangs von dem zweiten Betriebsmodus zu dem ersten Betriebsmodus an dem Ende des Schrittes des Verringerns des Betriebszyklus den Schritt aufweist, den Betriebszyklus durch voreingestellte Schritte zu vergrößern, um den ersten Betriebsmodus zu betreiben.

4. Verfahren nach einem der vorstehenden Ansprüche, ferner mit den Schritten während des zweiten Betriebsmodus (146):
- kontinuierliches Messen (S6) der Spannung (V_{H}), die an dem Hochspannungsbus (4) vorliegt;
- Vergleichen (S6) der Spannung (V_{H}), die an dem Hochspannungsbus (4) gemessen wird, mit einem ersten Bereich von voreingestellten optimalen Betriebswerten;
- auf der Basis des Vergleichs der Spannung (V_{H}), die an dem Hochspannungsbus (4) gemessen wird, mit dem ersten Bereich von voreingestellten optimalen Betriebswerten, Erhöhen (S6) oder Verringern (S6) des Wertes des Betriebszyklus durch voreingestellte Schritte, um den ersten Spannungswert (V_{H}) innerhalb des ersten Bereichs von voreingestellten optimalen Betriebswerten aufrechtzuerhalten.

5. Verfahren nach einem der vorstehenden Ansprüche, ferner mit den Schritten während des ersten Betriebsmodus (144):
- kontinuierliches Messen (S7) der Spannung (V_{L}), die an dem Niederspannungsbus (2) anliegt;
- Vergleichen (S1a; S1, S2) der Spannung (V_{L}), die an dem Niederspannungsbus (2) gemessen wird, mit einem zweiten Bereich von voreingestellten optimalen Betriebswerten;
- auf der Basis des Vergleichs der Spannung (V_{L}), die an dem Niederspannungsbus (2) gemessen wird, mit dem zweiten Bereich von voreingestellten optimalen Betriebswerten, Erhöhen (S7) oder Verringern (S1a; S1, S2) des Wertes des Betriebszyklus durch voreingestellte Schritte, um den ersten Spannungswert (V_{L}) innerhalb des zweiten Bereiches von voreingestellten optimalen Betriebswerten beizubehalten.

6. Verfahren nach einem der vorstehenden Ansprüche, wobei der Schritt des Steuerns (147; S3, S4) des Übergangs des bidirektionalen Gleichstromumwandlers (100) von dem ersten Betriebsmodus zu dem zweiten Betriebsmodus ferner die Schritte aufweist:
- kontinuierliches Messen (S5) der Spannung (V_{H}), die an dem Hochspannungsbus (4) anliegt;
- Vergleichen (S5, S7) der Spannung (V_{H}), die an dem Hochspannungsbus (4) gemessen wird, mit einem zweiten Grenzwert (V_{P}), der höher ist als der erste Grenzwert (V_{inf});
- wenn die Spannung (V_{H}), die an dem Hochspannungsbus (4) gemessen wird, höher ist als der zweite Grenzwert (V_{P}), Beibehalten (S7) des bidirektionalen Gleichstromumwandlers (100) in dem ersten Betriebsmodus;
- wenn die Spannung (V_{H}), die an dem Hochspannungsbus (4) gemessen wird, niedriger ist als der zweite Grenzwert (V_{P}), Abschließen (S5, S6) des Übergangs von dem ersten Betriebsmodus zu dem zweiten Betriebsmodus durch Steuern des bidirektionalen Gleichstromumwandlers (100) in dem zweiten Betriebsmodus.

7. Verfahren nach einem der vorstehenden Ansprüche, wobei der Schritt des Steuerns (148) des Übergangs von dem zweiten Betriebsmodus zu dem ersten Betriebsmodus ferner die Schritte aufweist:
- Beibehalten (S6) des bidirektionalen Gleichstromumwandlers (100) in dem zweiten Betriebsmodus für ein zweites voreingestelltes Zeitintervall;
- kontinuierliches Ermitteln (S6) am Ende des zweiten Zeitintervalls (t3), des Wertes des Betriebszyklus während des zweiten Betriebsmodus;
- Vergleichen (S6) des ermittelten Betriebszykluswerts mit einem Grenzbetriebszykluswert;
- wenn der ermittelte Betriebszykluswert niedriger ist als der Betriebszyklusgrenzwert, Steuern (S6, S1 a) des Übergangs von dem zweiten Betriebsmodus zu dem ersten Betriebsmodus.

8. Bidirektionaler Gleichstromumwandler (100), der zwischen einem Hochspannungsbus (4) und einem Niederspannungsbus (2) verbindbar ist, zum Übergang von einem ersten Betriebsmodus (144), in welchem Hochspannung in Niederspannung umgewandelt wird, und einem zweiten Betriebsmodus (146), in welchem Niederspannung in Hochspannung umgewandelt wird, mit:
- einem ersten Spannungsmessgerät (26), das ausgestaltet ist, um eine erste Spannung (V_{H}) zu messen, die an dem Hochspannungsbus (4) anliegt;
- einem zweiten Spannungsmessgerät (46), das ausgestaltet ist, um eine zweite Spannung (V_{L}) zu messen, die an dem Niederspannungsbus (2) anliegt;
- einer Steuerlogik (121), die ausgestaltet ist, um den bidirektionalen Gleichstromumwandler (100) in dem ersten oder in dem zweiten Betriebsmodus mit einem Betriebszyklus mit einem Wert zu steuern (S1 a), der größer als 0% ist;
- Steuerung (147), auf der Basis des ersten und der zweiten gemessenen Spannung, Übergang des bidirektionalen Gleichstromumwandlers (100) von dem ersten Betriebsmodus zu dem zweiten Betriebsmodus oder von dem zweiten Betriebsmodus zu dem ersten Betriebsmodus,
**dadurch gekennzeichnet, dass** das erste Spannungsmessgerät (26) ferner ausgestaltet ist, um während eines ersten voreingestellten Zeitintervalls (t2) kontinuierlich die Spannung (V_{H}) zu messen (S4), die an dem Hochspannungsbus (4) anliegt, und
die Steuerlogik (121) ferner ausgestaltet ist, um vor dem Steuern eines Übergangs von dem ersten Betriebsmodus zu dem zweiten Betriebsmodus des bidirektionalen Gleichstromumwandlers (100):
- Vergleichen (S4) der Spannung (V_{H}), die an dem Hochspannungsbus (4) gemessen wird, mit einem ersten Grenzwert (V_{inf});
- Überprüfen (S4) ob, innerhalb des ersten Zeitintervalls (t2), die Spannung (V_{H}) an dem Hochspannungsbus (4) einen Wert annimmt, der niedriger ist als der erste Grenzwert (V_{inf}), und falls dies bestätigt wird, Steuern (147; S3, S4) eines Übergangs des bidirektionalen Gleichstromumwandlers (100) von dem ersten Betriebsmodus zu dem zweiten Betriebsmodus; und
Verringern (S3) des Betriebszyklus durch voreingestellte Schritte, bis ein Betriebszykluswert von 0% erreicht ist.

9. Umwandler nach Anspruch 8, wobei die Steuerlogik (121) ferner ausgestaltet ist, um an dem Ende des Schrittes des Verringerns des Betriebszyklus, den Betriebszyklus durch voreingestellte Schritte zu erhöhen, um den Übergang von dem ersten Betriebsmodus zu dem zweiten Betriebsmodus durchzuführen.

10. Umwandler nach Anspruch 8 oder 9, wobei die Steuerlogik (121) ferner ausgestaltet ist, um an dem Ende des Schrittes des Verringerns des Betriebszyklus, den Betriebszyklus durch voreingestellte Schritte zu erhöhen, um den Übergang von dem zweiten Betriebsmodus zu dem ersten Betriebsmodus durchzuführen.

11. Umwandler nach einem der Ansprüche 8 - 10, wobei das erste Spannungsmessgerät (26) ferner ausgestaltet ist, um kontinuierlich die Spannung (V_{H}) zu messen, die an dem Hochspannungsbus (4) anliegt, und
die Steuerlogik (121) ferner ausgestaltet ist zum:
- Vergleichen (S6) der Spannung (V_{H}), die an dem Hochspannungsbus (4) gemessen wird, mit einem ersten voreingestellten Bereich von optimalen Betriebswerten;
- auf der Basis des Vergleichs der Spannung (V_{H}), die an dem Hochspannungsbus (4) gemessen wird, mit dem ersten voreingestellten Bereich von optimalen Betriebswerten, Erhöhen (S6) oder Verringern (S6) des Wertes des Betriebszyklus durch voreingestellte Schritte, um den ersten Spannungswert (V_{H}) innerhalb des ersten voreingestellten Bereiches von optimalen Betriebswerten beizubehalten.

12. Umwandler nach einem der Ansprüche 8 - 11, wobei das zweite Spannungsmessgerät (46) ferner ausgestaltet ist, um während des ersten Betriebsmodus, die Spannung (V_{L}), die an dem Niederspannungsbus (2) anliegt, kontinuierlich zu messen, und
die Steuerlogik (121) ferner ausgestaltet ist zum:
- Vergleichen (S1a; S1, S2) der Spannung (V_{L}), die an dem Niederspannungsbus (2) gemessen wird mit einem zweiten voreingestellten Bereich von optimalen Betriebswerten;
- auf der Basis des Vergleichs der Spannung (V_{L}), die an dem Niederspannungsbus (2) gemessen wird, mit dem zweiten voreingestellten Bereich von optimalen Betriebswerten, Erhöhen (S7) oder Verringern (S1a; S1, S2) des Wertes des Betriebszyklus durch voreingestellte Schritte, um den ersten Spannungswert (V_{L}) innerhalb des zweiten voreingestellten Bereiches von optimalen Betriebswerten beizubehalten.

13. Umwandler nach einem der Ansprüche 8 - 12, wobei das zweite Spannungsmessgerät (46) ferner ausgestaltet ist, um kontinuierlich die Spannung (V_{H}) zu messen (S5), die an dem Hochspannungsbus (4) anliegt, und
die Steuerlogik (121) ferner ausgestaltet ist zum:
- Vergleichen (S5, S7) der Spannung (V_{H}), die an dem Hochspannungsbus (4) gemessen wird, mit einem zweiten Grenzwert (V_{P}), der höher ist als der erste Grenzwert (V_{inf});
- wenn die Spannung (V_{H}), die an dem Hochspannungsbus (4) gemessen wird, höher ist als der zweite Grenzwert (V_{P}), Beibehalten (S7) des bidirektionalen Gleichstromumwandlers (100) in dem ersten Betriebsmodus;
- wenn die Spannung (VH), die an dem Hochspannungsbus (4) gemessen wird, unterhalb des zweiten Grenzwertes (V_{P}) liegt, Abschließen (S5, S6) des Übergangs von dem ersten Betriebsmodus zu dem zweiten Betriebsmodus durch Steuern des bidirektionalen Gleichstromumwandlers (100) in dem zweiten Betriebsmodus.

14. Umwandler nach einem der Ansprüche 8 - 13, wobei die Steuerlogik (121) ferner ausgestaltet ist, um während des Schrittes des Steuerns (148) des Übergangs von dem zweiten Betriebsmodus zu dem ersten Betriebsmodus, zum:
- Beibehalten (S6) des bidirektionalen Gleichstromumwandlers (100) in dem zweiten Betriebsmodus für ein zweites voreingestelltes Zeitintervall (t3);
- kontinuierliches Ermitteln (S6), ab dem Ende des zweiten Zeitintervalls (t3) an, des Wertes des Betriebszyklus während des zweiten Betriebsmodus;
- Vergleichen (S6) des ermittelten Betriebszykluswertes mit einem Betriebszyklusgrenzwert;
- falls der ermittelte Betriebszykluswert niedriger ist als der Betriebszyklusgrenzwert, Steuern (S6, S1 a) des Übergangs von dem zweiten Betriebsmodus zu dem ersten Betriebsmodus.

## Revendications

1. Procédé de commande d'un convertisseur CC-CC bidirectionnel (100) pouvant être relié entre un bus haute-tension (4) et un bus basse-tension (2) pour passer d'un premier mode de fonctionnement (144), dans lequel une tension élevée est convertie en une basse tension, et un second mode de fonctionnement (146), dans lequel une basse tension est convertie en une tension élevée, comprenant les étapes consistant à :
- commander (S1a) le convertisseur CC-CC bidirectionnel (100) dans le premier ou le second mode de fonctionnement avec un cycle d'utilisation ayant une valeur supérieure à 0 % ;
- mesurer (S2) une première tension (V_{H}) présente sur le bus haute-tension (4) ;
- mesurer (S1) une seconde tension (V_{L}) présente sur le bus basse-tension (2) ;
- commander automatiquement (147), sur la base desdites première et seconde tensions, le passage du convertisseur CC-CC bidirectionnel (100) du premier mode de fonctionnement au second mode de fonctionnement ou du second mode de fonctionnement au premier mode de fonctionnement,
**caractérisé en ce qu'**il comprend en outre, avant de commander le passage du premier mode de fonctionnement au second mode de fonctionnement, les étapes consistant à :
- mesurer en continu (S4), pendant un premier intervalle prédéfini (t2), la tension (V_{H}) présente sur le bus haute-tension (4) ;
- comparer (S4) la tension (V_{H}) mesurée sur le bus haute-tension (4) à une première tension seuil (V_{inf}) ; et
- vérifier (S4) si, dans le premier intervalle (t2), la tension (V_{H}) sur le bus haute-tension (4) prend une valeur inférieure à la première valeur seuil (V_{inf}) et, si c'est le cas, commander (147 ; S3, S4) le passage du convertisseur CC-CC bidirectionnel (100) du premier mode de fonctionnement au second mode de fonctionnement,
l'étape de commande (147) dudit passage comprenant une diminution du (S3) cycle d'utilisation par étapes prédéfinies jusqu'à ce qu'une valeur de cycle d'utilisation de 0 % soit atteinte.

2. Procédé selon la revendication 1, dans lequel ladite étape de commande (147) du passage du premier mode de fonctionnement au second mode de fonctionnement comprend, à la fin de ladite étape de diminution du cycle d'utilisation, l'étape consistant à augmenter le cycle d'utilisation par étapes prédéfinies afin de faire fonctionner ledit second mode de fonctionnement.

3. Procédé selon la revendication 1 ou 2, dans lequel ladite étape de commande (147) du passage du second mode de fonctionnement au premier mode de fonctionnement comprend, à la fin de ladite étape de diminution du cycle d'utilisation, l'étape consistant à augmenter le cycle d'utilisation par étapes prédéfinies afin de faire fonctionner ledit premier mode de fonctionnement.

4. Procédé selon l'une quelconque des revendications précédentes, comprenant en outre, durant le second mode de fonctionnement (146), les étapes consistant à :
- mesurer en continu (S6) la tension (V_{H}) présente sur le bus haute-tension (4) ;
- comparer (S6) la tension (V_{H}) mesurée sur le bus haute-tension (4) à une première plage de valeurs de fonctionnement optimales prédéfinies ;
- sur la base de ladite comparaison de la tension (V_{H}) mesurée sur le bus haute-tension (4) à la première plage de valeurs de fonctionnement optimales prédéfinies, augmenter (S6) ou diminuer (S6) la valeur du cycle d'utilisation par étapes prédéfinies afin de maintenir la première valeur de tension (V_{H}) dans la première plage de valeurs de fonctionnement optimales prédéfinies.

5. Procédé selon l'une quelconque des revendications précédentes, comprenant en outre, durant le premier mode de fonctionnement (144), les étapes consistant à :
- mesurer en continu (S7) la tension (V_{L}) présente sur le bus basse-tension (2) ;
- comparer (S1a ; S1, S2) la tension (V_{L}) mesurée sur le bus basse-tension (2) à une seconde plage de valeurs de fonctionnement optimales prédéfinies ;
- sur la base de ladite comparaison de la tension (V_{L}) mesurée sur le bus basse-tension (2) à la seconde plage de valeurs de fonctionnement optimales prédéfinies, augmenter (S7) ou diminuer (S1a ; S1, S2) la valeur du cycle d'utilisation par étapes prédéfinies afin de maintenir la première valeur de tension (V_{L}) dans la seconde plage de valeurs de fonctionnement optimales prédéfinies.

6. Procédé selon l'une quelconque des revendications précédentes, dans lequel ladite étape de commande (147 ; S3, S4) du passage du convertisseur CC-CC bidirectionnel (100) du premier mode de fonctionnement au second mode de fonctionnement comprend en outre les étapes consistant à :
- mesurer en continu (S5) la tension (VH) présente sur le bus haute-tension (4) ;
- comparer (S5, S7) la tension (V_{H}) mesurée sur le bus haute-tension (4) à une seconde valeur seuil (V_{P}) supérieure à la première valeur seuil (V_{inf}) ;
- si la tension (V_{H}) mesurée sur le bus haute-tension (4) est supérieure à la seconde valeur seuil (V_{P}), maintenir (S7) le convertisseur CC-CC bidirectionnel (100) dans le premier mode de fonctionnement ;
- si la tension (V_{H}) mesurée sur le bus haute-tension (4) est inférieure à la seconde valeur seuil (V_{P}), terminer (S5, S6) le passage du premier mode de fonctionnement au second mode de fonctionnement en commandant le convertisseur CC-CC bidirectionnel (100) dans le second mode de fonctionnement.

7. Procédé selon l'une quelconque des revendications précédentes, dans lequel ladite étape de commande (148) du passage du second mode de fonctionnement au premier mode de fonctionnement comprend en outre les étapes consistant à :
- maintenir (S6) le convertisseur CC-CC bidirectionnel (100) dans le second mode de fonctionnement pendant un second intervalle prédéfini ;
- détecter en continu (S6), à la fin du second intervalle (t3), la valeur du cycle d'utilisation durant ledit second mode de fonctionnement ;
- comparer (S6) la valeur de cycle d'utilisation détectée à une valeur de cycle d'utilisation seuil ;
- si la valeur de cycle d'utilisation détectée est inférieure à la valeur seuil de cycle d'utilisation, commander (S6, S1a) le passage du second mode de fonctionnement au premier mode de fonctionnement.

8. Convertisseur CC-CC bidirectionnel (100) pouvant être relié entre un bus haute-tension (4) et un bus basse-tension (2) pour passer d'un premier mode de fonctionnement (144), dans lequel une tension élevée est convertie en une basse tension, et un second mode de fonctionnement (146), dans lequel une basse tension est convertie en une tension élevée, comprenant :
- un premier voltmètre (26) configuré pour mesurer une première tension (V_{H}) présente sur le bus haute-tension (4) ;
- un second voltmètre (46) configuré pour mesurer une seconde tension (V_{L}) présente sur le bus basse-tension (2) ;
- une logique de commande (121) configurée pour commander (S1a) le convertisseur CC-CC bidirectionnel (100) dans le premier ou le second mode de fonctionnement avec un cycle d'utilisation ayant une valeur supérieure à 0 % ; commander (147), sur la base desdites première et seconde tensions mesurées, le passage du convertisseur CC-CC bidirectionnel (100) du premier mode de fonctionnement au second mode de fonctionnement ou du second mode de fonctionnement au premier mode de fonctionnement,
**caractérisé en ce que** le premier voltmètre (26) est en outre configuré pour mesurer (S4), en continu et durant un premier intervalle prédéfini (t2), la tension (V_{H}) présente sur le bus haute-tension (4), et
la logique de commande (121) est en outre configuré pour, avant de commander un passage du premier mode de fonctionnement au second mode de fonctionnement du convertisseur CC-CC bidirectionnel (100) :
- comparer (S4) la tension (V_{H}) mesurée sur le bus haute-tension (4) à une première valeur seuil (V_{inf}) ;
- vérifier (S4) si, dans le premier intervalle (t2), la tension (V_{H}) sur le bus haute-tension (4) prend une valeur inférieure à la première valeur seuil (V_{inf}), et, si c'est le cas, commander (147 ; S3, S4) un passage du convertisseur CC-CC bidirectionnel (100) du premier mode de fonctionnement au second mode de fonctionnement ;
diminuer (S3) le cycle d'utilisation par étapes prédéfinies jusqu'à ce qu'une valeur de cycle d'utilisation de 0 % soit atteinte.

9. Convertisseur selon la revendication 8, dans lequel la logique de commande (121) est en outre configurée, à la fin de ladite étape de diminution du cycle d'utilisation, pour augmenter le cycle d'utilisation par étapes prédéfinies afin d'effectuer le passage du premier mode de fonctionnement au second mode de fonctionnement.

10. Convertisseur selon la revendication 8 ou 9, dans lequel la logique de commande (121) est en outre configurée, à la fin de ladite étape de diminution du cycle d'utilisation, pour augmenter le cycle d'utilisation par étapes prédéfinies afin d'effectuer le passage du second mode de fonctionnement au premier mode de fonctionnement.

11. Convertisseur selon l'une quelconque des revendications 8 à 10, dans lequel le premier voltmètre (26) est en outre configuré pour mesurer en continu la tension (V_{H}) présente sur le bus haute-tension (4), et
la logique de commande (121) est en outre configurée pour :
- comparer (S6) la tension (V_{H}) mesurée sur le bus haute-tension (4) à une première plage prédéfinie de valeurs de fonctionnement optimales ;
- sur la base de ladite comparaison de la tension (V_{H}) mesurée sur le bus haute-tension (4) à la première plage prédéfinie de valeurs de fonctionnement optimales, augmenter (S6) ou diminuer (S6) la valeur du cycle d'utilisation par étapes prédéfinies afin de maintenir la première valeur de tension (V_{H}) dans la première plage prédéfinie de valeurs de fonctionnement optimales.

12. Convertisseur selon l'une quelconque des revendications 8 à 11, dans lequel le second voltmètre (46) est en outre configuré pour mesurer, en continu et durant le premier mode de fonctionnement, la tension (V_{L}) présente sur le bus basse-tension (2), et
la logique de commande (121) est en outre configurée pour :
- comparer (S1a ; S1, S2) la tension (V_{L}) mesurée sur le bus basse-tension (2) à une seconde plage prédéfinie de valeurs de fonctionnement optimales ;
- sur la base de ladite comparaison de la tension (V_{L}) mesurée sur le bus basse-tension (2) à la seconde plage prédéfinie de valeurs de fonctionnement optimales, augmenter (S7) ou diminuer (S1a ; S1, S2) la valeur du cycle d'utilisation par étapes prédéfinies afin de maintenir la première valeur de tension (V_{L}) dans la seconde plage prédéfinie de valeurs de fonctionnement optimales.

13. Convertisseur selon l'une quelconque des revendications 8 à 12, dans lequel le second voltmètre (46) est en outre configuré pour mesurer en continu (S5) la tension (V_{H}) présente sur le bus haute-tension (4), et
la logique de commande (121) est en outre configurée pour :
- comparer (S5, S7) la tension (V_{H}) mesurée sur le bus haute-tension (4) à une seconde valeur seuil (V_{P}) supérieure à la première valeur seuil (V_{inf}) ;
- si la tension (V_{H}) mesurée sur le bus haute-tension (4) est supérieure à la seconde valeur seuil (V_{P}), maintenir (S7) le convertisseur CC-CC bidirectionnel (100) dans le premier mode de fonctionnement ;
- si la tension (V_{H}) mesurée sur le bus haute-tension (4) est inférieure à la seconde valeur seuil (V_{P}), terminer (S5, S6) le passage du premier mode de fonctionnement au second mode de fonctionnement en commandant le convertisseur CC-CC bidirectionnel (100) dans le second mode de fonctionnement.

14. Convertisseur selon l'une quelconque des revendications 8 à 13, dans lequel la logique de commande (121) est en outre configurée, durant l'étape de commande (148) du passage du second mode de fonctionnement au premier mode de fonctionnement, pour :
- maintenir (S6) le convertisseur CC-CC bidirectionnel (100) dans le second mode de fonctionnement pendant un second intervalle prédéfini (t3) ;
- détecter en continu (S6), à la fin du second intervalle (t3), la valeur du cycle d'utilisation durant ledit second mode de fonctionnement ;
- comparer (S6) la valeur de cycle d'utilisation détectée à une valeur de cycle d'utilisation seuil ;
- si la valeur de cycle d'utilisation détectée est inférieure à la valeur seuil de cycle d'utilisation, commander (S6, S1a) le passage du second mode de fonctionnement au premier mode de fonctionnement.
